# EUROPEAN PATENT APPLICATION

(11) **EP 3 156 770 A1**
(43) Date of publication of application: **19.04.2017**
(21) Application number: 15190025.5
(22) Date of filing: 15.10.2015
(51) Int. Cl.: G01D 11/24

(54) **ROTATIONAL SENSOR**

(71) Applicant: NXP B.V., 5656 AG Eindhoven (NL)
(72) Inventor: Offermann, Bernd, Redhill, Surrey RH1 1SH (GB); Kock, Jorg, Redhill, Surrey RH1 1SH (GB)
(74) Representative: Terblanche, Candice Jane

(57) **Abstract**

A sensor package is provided. The sensor package comprises a first lead comprising a first anchoring area configured to anchor the first lead to a package body; a second lead comprising a second anchoring area configured to anchor the second lead to the package body; a sensor component; and a capacitor coupled between the first and second anchoring areas.

## Description

### FIELD

The present disclosure relates to sensors and in particular, but not exclusively, to the configuration of a rotational sensor.

### BACKGROUND

Magnetic sensor systems are increasingly important in various industries. For instance in the automotive industry, various sensor systems, such as parking sensors, angular sensors e.g. in throttle valves, ABS (Automatic Braking System) sensors and tire pressure sensors are found in modern vehicles for improving comfort and safety. Magnetic sensor systems are particularly important in automotive applications, because magnetic fields penetrate easily through most materials. In addition, magnetic sensors are highly insensitive to dirt, unlike for example optical sensors.

There are various applications for sensors that can measure the rotation or angle of a component. These rotational sensors generally comprise a magnet and one or more capacitors. The magnet may be placed close to a sensor integrated circuit (IC) in order to provide either a stabilizing bias field or a working magnetic field which can be modulated by a ferromagnetic toothed wheel rotating in front of the sensor IC. The sensor IC may additionally need to be coupled to a capacitor that can be mounted on a PCB to which the sensor package is mounted, or be provided in a separate compartment in the sensor package.

Different sensor applications may have restrictions regarding the size and shape of a sensor package in order to allow the sensor to be mounted as close as necessary to a target to be measured. Thus the arrangement of the sensor package may be of interest.

### SUMMARY

According to a first aspect of the disclosure, there is provided a sensor package comprising: a first lead comprising a first anchoring area configured to anchor the first lead to a package body; a second lead comprising a second anchoring area configured to anchor the second lead to the package body; a sensor component; and a capacitor coupled between the first and second anchoring areas.

A portion of the first and second leads, the sensor component and the capacitor may be encapsulated within the package body. The first and second anchoring areas may be first and second stitch bond areas. The sensor package may further comprise: a first bond wire connection coupling a first terminal of the sensor component to the first anchoring portion; and a second bond wire connection coupling a second terminal of the sensor component to the second anchoring portion. The first and second bond wire connections may be coupled to the first and second anchoring portions via a stitch bond.

The first and second anchoring areas may be configured to anchor the leads to the package body by each having a width greater than the width of a portion of the respective lead that extends from package body. The first and the second lead may comprise a first major surface and a second major surface parallel and opposite the first major surface. The sensor package of any preceding claim wherein the second lead may further comprise a sensor mounting area to which the sensor component is mounted.

The sensor component may be mounted on the first major surface of the sensor mounting area. The capacitor may be mounted on the first major surface of the respective first and second anchoring portions. The sensor package may be configured to be coupled to a magnet. The capacitor may be mounted to the second major surface of the respective first and second anchoring portions. The sensor package may further comprise: a magnet mounted to the second major surface of the sensor mounting area.

### FIGURES

Embodiments will be described, by way of example only, with reference to the drawings, in which:
Figure 1 shows a sensor package;
Figure 2 shows a structure of a sensor package in accordance with an example of embodiments of the present disclosure;
Figure 3a shows a first view of a sensor package according to a first example;
Figure 3b shows a second view of a sensor package according to the first example;
Figure 4a shows a first view of a sensor package according to a second example; and
Figure 4b shows a second view of a sensor package according to the second example.

### DESCRIPTION

A sensor package may comprise a sensor IC coupled to the package leads. The sensor IC may be encapsulated in a first body or compartment. A magnet may either be coupled to or provided within the first body. This placement of the magnetic may be so that the sensor IC is in close proximity to the magnet and is within the magnetic field generated by the magnet. The implementation of the sensor function may further require a capacitor.

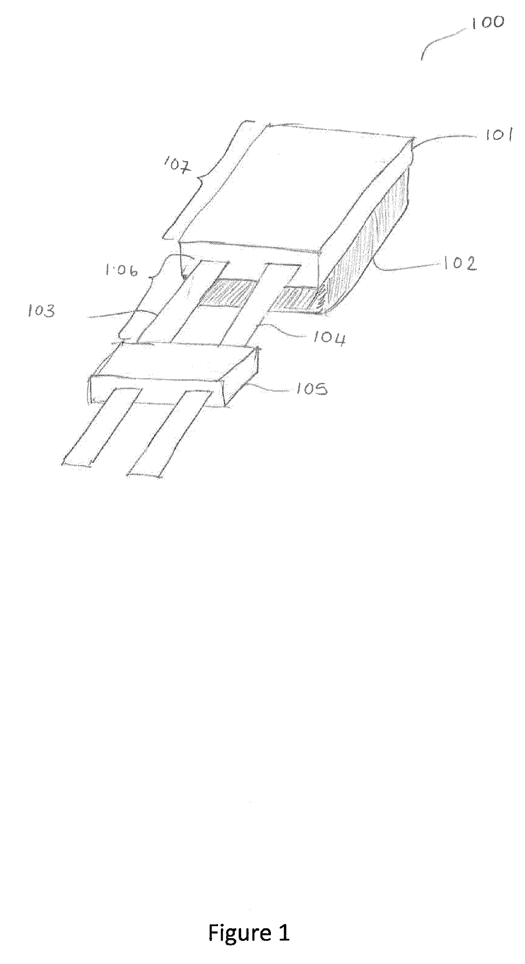

In some implementations, a capacitor may be mounted to a PCB to which the sensor package is coupled. In applications that require a limited distance between the sensor IC and capacitor, the mounting of the capacitor on the PCB may be unsuitable. In other implementations, a capacitor may be provided in a second body that is coupled to the package leads and forms part of the sensor package. Figure 1 shows an example of such an implementation.

Figure 1 shows a sensor package 100 comprising a first body 101, a second body 105, a magnet 102 and a first 103 and second 104 package lead. The first body 101 may encapsulate a sensor IC and may be coupled to the magnet 102 and the first and second package leads 103, 104. The second body 105 may encapsulate a capacitor and be coupled to the first and second package leads 103, 104. There may be a length 106 of the leads 103, 104 between the first body 101 and the second body 105. The first body 101 may have a first body length 107.

When used in an application, the sensor package 100 may be mounted in the vicinity of a component, the rotation of which the sensor package 100 is configured to measure. The size and shape of the area available for the sensor, and in particular the positioning of the sensor IC and magnet with respect to the component, may be restricted. For example, there may be a restriction on the length of the first body 107. In the example of figure 1, a capacitor may be provided in the second body 105 in order to minimize the size of the first body 101 comprising the sensor IC. The length 106 of the leads 103 and 104 may be provided to allow bends in the leads to adjust the shape of the sensor package 100.

The size of a sensor package 100 and the amount of shape customization of the sensor package may be of interest when using the sensor package in various applications.

Embodiments of the present disclosure are directed to a sensor package having a capacitor and a sensor IC provided in a first body. Package leads of the sensor package may comprise anchoring portions configured to anchor the leads to the first body. The capacitor may be coupled to the package leads at the anchoring portions of the respective leads. In some embodiments, coupling the capacitor to the leads at the anchoring portions may allow a body length of the first body to be less than a maximum body length requirement. In some embodiments, providing the capacitor in the first body may allow the shape of the sensor package to be more flexible than if the capacitor was provided in a second body. In examples, a magnet may be coupled to the first body or provided within the first body.

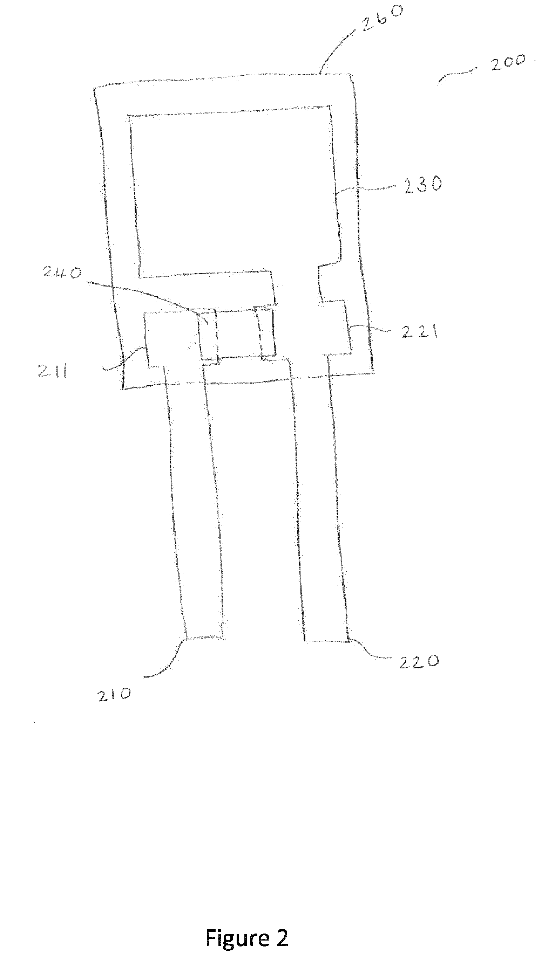

Figure 2 shows an example of a sensor package structure according to one embodiment. Figure 2 shows a sensor package 200 comprising package leads. The package leads may comprise a first package lead 210, a second package lead 220 and a sensor mounting portion 230. The package may further comprise a first body 260. The first package lead 210 may comprise a first anchoring portion 211 and the second package lead 220 may comprise a second anchoring portion 221. The first and second anchoring portions 211 and 221 may be configured to anchor the respective first and second package leads 210, 220 to the first body 260. The sensor package 200 may further comprise a capacitor 240. The capacitor may be coupled between the first and second package leads 210, 220 at the first and second anchoring portions 211, 221. The dotted lines in figure 2 show the configuration of the first and second anchoring portions 211, 221 that lie below the capacitor 240.

The sensor package 200 may further comprise a sensor IC and, optionally, a magnet. The sensor IC and optional magnet are not shown in figure 200 as the configuration of these elements within the sensor package 200 may vary. For example, while the sensor IC may be mounted on the sensor mounting portion 230, the capacitor 240 may be mounted on a same side of the leads as the sensor IC or on the opposite side of the leads to the sensor IC. In some examples, a magnet may be incorporated within the body 200. The magnet may be mounted on the side of the leads opposite to the side on which the sensor IC is mounted. In this case, the capacitor 240 may be mounted on the same side of the leads as the magnet or on the same side of the leads as the sensor IC.

The first body 260 may be configured to encapsulate the capacitor 240, sensor IC, magnet (if present) and a portion of the package leads 210, 220 including the anchoring portions 211,212. In some examples the body 260 may be a plastic body.

The anchoring portions 211, 221 may form a geometric structure configured to anchor the leads in the body 260. In some examples, the anchoring portions 211, 221 may be configured to have a width greater than the width of the portion of the leads protruding from the body 260. In the example of figure 2, the anchoring portions 211, 221 are shown as being rectangular in shape, it will be however be appreciated that the shape and configuration of the anchoring portions will be such that the body 260 is anchored to the leads 210, 220 via these portions and that their shape and configuration may change accordingly.

The anchoring portions 211, 221 may further be stitch bond areas. The stitch bond areas may provide an area for a stitch bond between a bond wire and the respective lead. The bond wire may be coupled between the respective lead and the sensor IC. In examples, these bond wires may provide an electrical connection between the sensor IC and the respective package leads 210, 220.

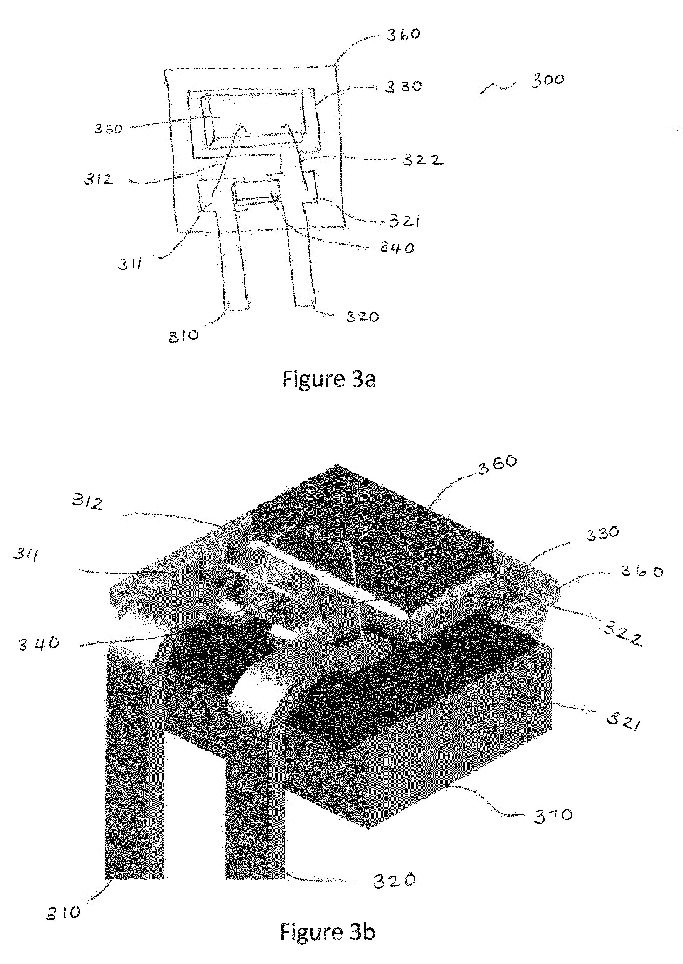

Figures 3a and 3b show an example of a sensor package configured to be coupled to a magnet external to the sensor package. Figure 3a shows a first, top view of a sensor package 300 and figure 3b shows a second, isometric projection of the sensor package 300.

The sensor package 300 comprises a first package lead 310 comprising a first anchoring portion 311, second package lead 320 comprising a second anchoring portion 321, a sensor mounting area 330 and a body 360. The sensor package 300 further comprises a capacitor 340 that is mounted to and between the first and second anchoring portions 311, 321. The sensor package 300 further comprises a sensor IC 350 coupled to the sensor mounting area 330. The sensor IC 350 is coupled to a first bond wire connection 312 which is coupled to the first anchoring portion 311. The sensor IC 350 is further coupled to a second bond wire connection 322 which is coupled to the second anchoring portion 321. The first and second bond wire connections 312, 322 may be stitch bonded to the respective first and second anchoring portions 311, 321.

Figure 3a shows a top view of the sensor package 300 showing a first or top surface of the leads 310, 320. It will be appreciated that the leads 310, 320 may have a second surface, opposite the first surface and parallel thereto. In the example of figure 3a, the capacitor 340 and the sensor IC 350 are both mounted to the first surface of the leads 310, 320. The body 360 may encapsulate the capacitor 340, sensor IC 350, bond wire connections 312, 322 and a portion of the leads 310 and 320. In the following discussion the first surface of the leads 310, 320 can be considered to be the surface on which the sensor IC is mounted.

In the view of figure 3b, the sensor package 300 is shown with a magnet 370 attached to the body 360. Figure 3b further shows the first and second package leads 310 and 320 being bent at a point at which they protrude from the body 360 which may be desirable in some applications. It will be appreciated that for the purposes of clear depiction of the elements of the sensor package 300 only a bottom half of the body 360 has been depicted in figure 3b.

Figures 3a and 3b show the capacitor 340 mounted on the same side of the leads as the sensor IC 350, however it will be appreciated that in other examples with an external magnet, the capacitor may be mounted on an opposite side of the leads.

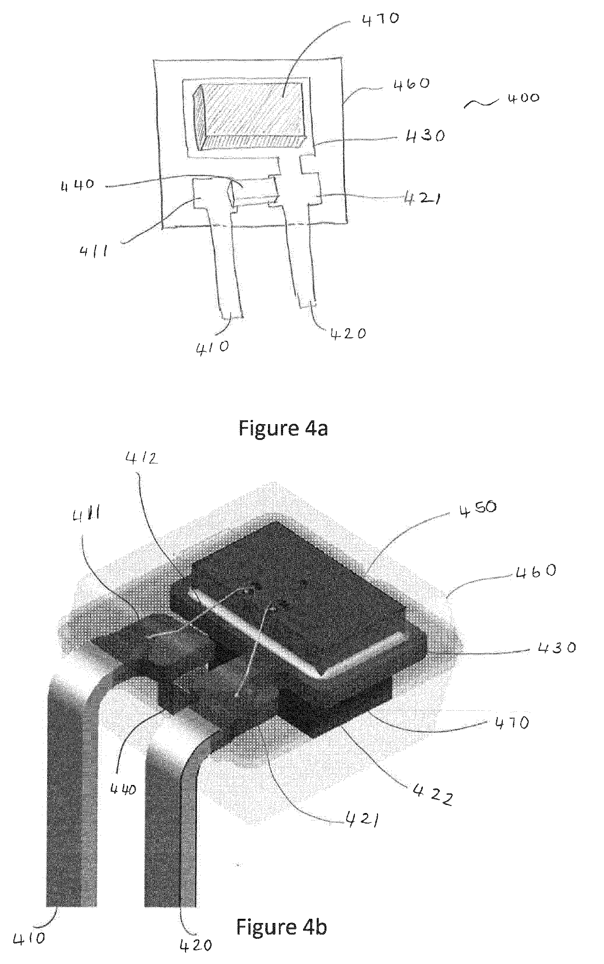

Figure 4a and 4b show an example of a sensor package 400 that includes a magnet within the sensor package 400. While figure 3a depicted a view of the top or first surface view of the package leads of the sensor package 300, Figure 4b shows a view of the bottom or second surface of package leads of a sensor package 400. It will be appreciated that the surface of the leads onto which the sensor IC is mounted is considered the top or first surface for purposed of this discussion.

Figure 4a shows a sensor package 400 comprising a first package lead 410 having a first anchoring portion 411, a second package lead 420 having a second anchoring portion 421 and a sensor mounting portion 430, a body 460 and a capacitor 440 mounted between the first and second anchoring portions 411, 421. The sensor package 400 further comprises a magnet 470 mounted to the sensor mounting portion 430.

The magnet 470 may be mounted to a bottom surface of the leads and in particular to the bottom surface of the sensor mounting area 430. The capacitor 440 may be mounted to a bottom surface of the leads and in particular to a bottom surface of the first and second anchoring portions 411 and 421.

In the view of figure 4b, the sensor package 400 is shown with a magnet 470 integrated within the body 460. The package 400 may further comprise a sensor IC 450 mounted to a top surface of the sensor mounting area 430 and further bond wire connections 412 and 422 coupling the sensor IC 450 to the top surface of the first and second anchoring portions 411, 421. It will be appreciated that the sensor IC 450 and bond wire connections 412 and 422 may be arranged similarly to those described with reference to those of figure 3a and b.

In figure 4, the capacitor 440 has been shown as being mounted on the same side of the leads 410, 420, 430 as the sensor IC 450, however it will be appreciated that in some embodiments, the capacitor 440 may be mounted on the opposite side of the leads 410, 420, 430.

The capacitor 240, 340,440 may be coupled to the first and second anchoring portions 211, 221; 311, 321; 411, 421 by any suitable means, for example by glue, solder or other connections of the capacitor or capacitor seats. In some examples, the capacitor seats may be coined - the capacitor seat area of the leads may be recessed with respect to the rest of the leads. It will be appreciated that this recessed area will have a first side and a second side corresponding to the first and second sides of the first lead, second lead and sensor mounting area.

It will be appreciated that the sensor IC may be any suitable sensor component.

In the foregoing reference has been made to a (first) side and a (second) opposite of the leads and/or sensor mounting area. It will be appreciated that the leads (including the sensor mounting area) may have a first major surface (top side) and a second major surface (bottom side). The first and second major surfaces may be opposite each other and may be parallel. It will be appreciated that the sensor mounting area and anchoring areas may be provided having this first major surface and second major surface and that components may be mounted on either surface as described in the foregoing.

It will be appreciated that the sensor IC in the foregoing may comprise any kind of relevant sensor. In one example the sensor may be one of a Hall sensor and a magnetoresistive sensor, for example an anisotropic magnetoresistive (AMR), giant magnetoresistive (GMR) and/or tunnel magnetoresistive (TMR) sensors.

Several different magnetic sensor technologies are currently available, such as sensors based on the Hall effect, lateral magnetic field sensors based on silicon and constructed on the basis of bipolar lateral magnetoresistors (LMRs), lateral magnetotransistors (LMTs), and lateral magnetodiodes (LMDs) as well as sensors based on the magnetoresistive effect, such as anisotropic magnetoresistive (AMR) and giant magnetoresistive (GMR) sensors.

Hall effect based sensors and the bipolar lateral magneto-resistors, transistors and diodes, i.e. LMRs, LMTs and LMDs, rely on the Lorentz force caused by the magnetic flux acting on moving charge carriers. The sensing principle of AMR and GMR sensor systems is based on the physical phenomenon that the electric resistance of a ferromagnetic material depends on the angle between the magnetization and the direction of the electric current within an AMR or GMR sensing element.

The described embodiments are to be considered in all respects only as illustrative and not restrictive. The scope of the invention is, therefore, indicated by the appended claims rather than by this detailed description. All changes that come within the meaning and range of equivalency of the claims are to be embraced within their scope.

Reference throughout this specification to features, advantages, or similar language does not imply that all of the features and advantages that may be realized with the present invention should be or are in any single embodiment. Rather, language referring to the features and advantages is understood to mean that a specific feature, advantage, or characteristic described in connection with an embodiment is included in at least one embodiment. Thus, discussions of the features and advantages, and similar language, throughout this specification may, but do not necessarily, refer to the same embodiment.

One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

## Claims

1. A sensor package comprising:
a first lead comprising a first anchoring area configured to anchor the first lead to a package body;
a second lead comprising a second anchoring area configured to anchor the second lead to the package body;
a sensor component; and
a capacitor coupled between the first and second anchoring areas.

2. The sensor package of claim 1 where a portion of the first and second leads, the sensor component and the capacitor are encapsulated within the package body.

3. The sensor package of any preceding claim where the first and second anchoring areas are first and second stitch bond areas.

4. The sensor package of any preceding claim further comprising:
a first bond wire connection coupling a first terminal of the sensor component to the first anchoring portion; and
a second bond wire connection coupling a second terminal of the sensor component to the second anchoring portion.

5. The sensor package of claim 4 wherein the first and second bond wire connections are coupled to the first and second anchoring portions via a stitch bond.

6. The sensor package of any preceding claim wherein the first and second anchoring areas are configured to anchor the leads to the package body by each having a width greater than the width of a portion of the respective lead that extends from package body.

7. The sensor package of any preceding claim wherein the first and the second lead comprise a first major surface and a second major surface parallel and opposite to the first major surface.

8. The sensor package of any preceding claim wherein the second lead further comprises a sensor mounting area to which the sensor component is mounted.

9. The sensor package of claim 8 when dependent on claim 7 wherein the sensor component is mounted on the first major surface of the sensor mounting area.

10. The sensor package of claim 7 or 9 wherein the capacitor is mounted on the first major surface of the respective first and second anchoring portions.

11. The sensor package of any preceding claim wherein the sensor package is configured to be coupled to a magnet.

12. The sensor package of claim 9 wherein the capacitor is mounted to the second major surface of the respective first and second anchoring portions.

13. The sensor package of any of claims 9 and 12 further comprising:
a magnet mounted to the second major surface of the sensor mounting area.
